**Europäisches Patentamt**

**European Patent Office**

**Office européen des brevets**

(19)

(11) Veröffentlichungsnummer: **0 323 851**
**A2**

---

(12) **EUROPÄISCHE PATENTANMELDUNG**

(21) Anmeldenummer: **89100173.7**

(22) Anmeldetag: **05.01.89**

(51) Int. Cl.⁴: **H 04 N 5/278**

(30) Priorität: **08.01.88 BG 82563/88**
**14.03.88 BG 83313/88**

(43) Veröffentlichungstag der Anmeldung:
**12.07.89 Patentblatt 89/28**

(84) Benannte Vertragsstaaten:
**CH DE FR GB LI NL**

(71) Anmelder: **BULGARSKA TELEVISIA kam KOMITET sa**
**TELEVISIA i RADIO**
**San-Stefano Strasse 29**
**Sofia (BU)**

(72) Erfinder: **Vladkov, Emil Pentchev, Dipl.-Ing.**
**Komplex Serdika Block 21 App.40**
**BU-1303 Sofia (BG)**

(74) Vertreter: **Ebbinghaus, Dieter et al**
**Patentanwälte v. Füner, Ebbinghaus, Finck Mariahilfplatz**
**2 & 3**
**D-8000 München 90 (DE)**

(54) **Verfahren und Vorrichtung zur Eingabe von Symbolen in ein Programm-Fernsehsignal.**

(57) Das Verfahren und die Vorrichtung finden Anwendung in der Fernseh-Studiotechnik und sichern eine unveränderlich hohe Qualität des Programmsignals nach Einführung von Symbolen in dasselbe. Diese sind auch in einem Studio, das nach dem Standard SEKAM arbeitet, anwendbar. Das Verfahren besteht im Summieren des Programmsignals und des Symbolsignals, das nach dem Pegel so formiert ist, daß sein Wert stets kleiner oder gleich dem Unterschied des Helligkeitspegels des im Bild übertragenen Symbols und des Momentan-Helligkeitspegels des Programmsignals ist. Der Helligkeitspegel des im Bild übertragenen Symbols ist konstant (maximal oder Null) oder verändert sich in Abhängigkeit von Momentan-Helligkeitspegel des Programmsignals.

Die Vorrichtung findet Anwendung in der Fernseh-Studiotechnik bei allen standarten Systemen für die Farbigkeitsübertragung. Einen besonderen Vorteil hat ihre Anwendung bei SEKAM-Signalen, weil die Mischfunktion ohne Frequenzteilung des Farbigkeitssignals und ohne seine Demodulation erfolgt. Es wird das Adaptiv-Verfahren zum Formieren des Pegels des graphischen Signals benutzt. Die Adaptivität gegenüber dem Signal wird in Bezug auf den optimalen Endkontrast der insertierten Graphik gemäß der laufenden Helligkeit fortgesetzt, was außerdem einen neuen Effekt der Durchsichtigkeit des insertierten Bilds schafft. In der Vorrichtung werden einfache und beständige Translatoren der Pegel des Eingangs-Videosignals mit einer End-Schlüsselbearbeitung benutzt, bei welchem außer einer hohen Beständigkeit und Genauigkeit auch ein erhöhtes Signal/Rauschverhältnis erreicht wird, weil der Kanal für die Bearbeitung geschlossen ist, wenn kein Signal für Invertieren vorhanden ist.

FIG. 3

EP 0 323 851 A2

**Beschreibung**

### VERFAHREN UND VORRICHTUNG ZUR EINGABE VON SYMBOLEN IN EIN PROGRAMM-FERNSEHSIGNAL

Die Erfindung betrifft ein Verfahren und eine Vorrichtung zur Eingabe von Symbolen in ein Programm-Fernsehsignal, das anwendbar ist in der Studiotechnik sowie in der angewandten Fernseh- und computergraphischen Technik zum Einführen von Buchstaben, Ziffern und weiterer graphischer Symbolen in den visuellen Teil des Fernsehbildes.

Aus der GB-A-2078049 ist ein Verfahren zur Eingabe von Symbolen in ein Programm-Fernsehsignal bekannt, bei dem das Programm-Signal und das Signal für die Symbole summiert werden. Das Programmsignal wird vorher mit einem sich bis zu einer Eins ergänzenden Bruchteil des Symbolsignals multipliziert. Das Symbolsignal wird vor dem Summieren um einen konstanten Wert vermindert.

Aus der GB-A-2078049 ist ferner eine Vorrichtung zur Durchführung des Verfahrens bekannt, die eine Mischstufe enthält, an deren ersten Eingang über einen Analog-Multiplizierer die Quelle des Programm-Fernsehsignals angeschlos sen ist. Ihr zweiter Eingang ist über einen Spannungsteiler mit dem Ausgang des Symbolgenerators verbunden, während ihr Ausgang ein Ausgang der Vorrichtung ist. An den zweiten Eingang des Analog-Multiplizierers ist ein summierender Inverter angeschlossen, mit dessen einem Eingang das Potential -1 verbunden ist. Mit dem anderen Eingang ist über einen zweiten Spannungsteiler das Symbolsignal verbunden.

Nachteil des bekannten Verfahrens und der bekannten Vorrichtung zur Eingabe von Symbolen in ein Programm-Fernsehsignal ist die verschlechterte Qualität des Programm-Fernsehsignals nach der Eingabe der Symbole, verbunden mit den Linearitätsfehlern, welche die Multiplizierung des Signals begleiten.

Ein weiterer Nachteil des bekannten Verfahrens und der bekannten Vorrichtung zur Eingabe von Symbolen in ein Programm-Fernsehsignal besteht darin, daß sie bei einem Programmsignal nach dem System SEKAM nicht anwendbar sind, weil während der Vorbearbeitung des Programmsignals vor dem Summieren (das Multiplizieren) der Pegel der Trägerfrequenz für die Farbigkeit sich unvermeidlich bis zu seiner Einstellung vermindert, was für dieses System unzulässig ist.

Aus Michel COX, England, DRG.No.C6368 A3 "SEKAM SUBTITLE INSERTER", Technical Manual, 6.12.83 Issued BLK.OIAG PPC ist ein Verfahren zur Eingabe von Symbolen in ein Programm-Fernsehsignal bekannt, welches für Signale im SEKAM anwendbar ist, bei dem das Programmsignal partiell in ein Helligkeits-Videosignal und in ein sukzessives Farbunter schieds-Videosignal dekodiert wird. Nach Korrektur des Helligkeits- und Farbkontrasts wird es samt dem Symbolsignal nach SEKAM kodiert. Das kodierte Signal wird mit dem Eingangs-Programmsignal umgeschaltet, der Zeit nach ausgeglichen für die Reihen mit den aufrechterhaltenen Symbolsignalen.

Bei der Vorrichtung zur Durchführung des zweiten Verfahrens ist das Programmsignal an einen Partialdekoder SEKAM und über eine Zeitausgleich-Einheit an den einen Signaleingang eines Kommutators angeschlossen, dessen Ausgang ein Ausgang der Vorrichtung ist. Die Ausgänge des Partialdekoders sind über eine Korrektureinheit mit einem zweiten Umschalter verbunden, dessen weiterer Eingang mit dem Ausgang einer Einheit zur Wiederherstellung des Gleichstrompegels in Verbindung steht. Der Steuereingang des zweiten Umschalters ist an den Ausgang eines Symbolgenerators angeschlossen. Der Ausgang desselben Umschalters steht in Verbindung mit dem zweiten Signaleingang des ersten Kommutators, während der Steuereingang desselben mit dem Ausgang eines Box-Prozessors für einen Rahmen verbunden ist.

Ein Nachteil des zweiten Verfahrens und der zweiten Vorrichtung ist wegen der Prozesse Dekodieren/Kodieren die verminderte Qualität des Programmsignals und der eingeführten Symbole.

Ein weiterer Nachteil des bekannten Verfahrens und der bekannten Vorrichtung ist die Notwendigkeit des Ausgleichs mit großen Zeiten, die verbunden sind mit Phasen-Frequenz-Verkrümmungen für das Programmsignal. Nachteil der bekann ten Vorrichtung ist ferner ihre begrenzte Möglichkeit, mit einem Programmsignal nach einem einzigen Standart, z.B. nach SEKAM, zu arbeiten.

Aus ROBERT BOSCH GmbH, Dortmund, 3.3.1981, ZEICHENZUSÄTZE XC ZV 63A, Dokumentation FDL60 A 4 - 13182-00-SX ist eine dritte Vorrichtung zur Eingabe von Symbolen in ein Programm-Fernsehsignal bekannt, die einen Summator enthält, dessen erster Eingang an den Ausgang einer Einheit zum Fixieren des Gleichstrompegels angeschlossen ist. Sein zweiter Eingang steht in Verbindung mit dem Ausgang einer Summiereinheit, deren erster Eingang über ein Tiefpassfilter an den Ausgang der Einheit zum Fixieren des Gleichstrompegels angeschlossen ist. Ihr zweiter Eingang ist mit dem Ausgang des Symbolgenerators verbunden. Der Ausgang des Summierers ist am Ausgang der Vorrichtung angeschlossen. Der erste Eingang des Summierers ist an den Ausgang der Einheit zum Fixieren des Gleichstrompegels über ein das Farbigkeitssignal durchlassendes Bandfilter angeschlossen. Der Ausgang der Summiereinheit ist über einen Pegelbegrenzer an den zweiten Eingang des Summierers angeschlossen. Die Funktion der Summiereinheit (Begrenzer in der Vorrichtung zur Eingabe von Symbolen in ein Programm-Fernsehsignal)wird von einem Umschalter mit einer Priorität nach der Amplitude seiner Eingangssignale ausgeführt.

Ein Nachteil dieser bekannten Vorrichtung zur Eingabe von Symbolen in ein Programm-Fernsehsignal ist die verminderte Qualität des Ausgangs-Programmfernsehsignals, die hervorgerufen ist von den Frequenz- und Phasenverzerrungen, welche die Filterung des Helligkeitssignals und des Farbsignals begleiten.

Ein weiterer Nachteil der bekannten Vorrichtung zur Eingabe von Symbolen in ein Programm-Fernsehsignal besteht im begrenzten Kontrast der Symbole im Bild in den Teilen mit erhöhter Helligkeit, weil eine Adaption der Polarität der Symbole gegenüber der Helligkeit des Programmsignals fehlt.

Aufgabe der Erfindung ist es, ein Verfahren und eine Vorrichtung zur Eingabe von Symbolen in ein Programm-Fernsehsignal zu schaffen, welche eine unveränderliche Qualität des Programm-Fernsehsignals nach Einführen der Symbole sichern und zwar unabhängig vom Kodierstandart des Programm-Fernsehsignals, einschließlich der Signale nach dem SEKAM-System.

Diese Aufgabe wird durch ein Verfahren zur Eingabe von Symbolen in ein Programm-Fernsehsignal gelöst, bei dem das Programm-Signal und das Symbolsignal summiert werden. Vor dem Summieren wird das Symbolsignal nach dem Pegel so formiert, daß sein Wert stets kleiner oder gleich dem Unterschied zwischen dem Helligkeitspegel des im Bild übertragenen Symbols und dem momentanen Helligkeitspegel des Programmsignals ist. Der Helligkeitspegel des im Bild übertragenen Symbols kann konstant oder in Abhängigkeit vom momentanen Helligkeitspegel des Programmsignals veränderlich sein.

Diese Aufgabe wird ferner durch eine Vorrichtung zur Eingabe von Symbolen in ein Programm-Fernseh-Signal gelöst, welche eine Mischstufe enthält, an deren ersten Eingang eine Quelle eines komplexen Fernsehsignals angeschlossen ist, mit deren zweitem Eingang der Ausgang des Symbol- Generators verbunden ist und deren Ausgang einen Ausgang der Vorrichtung darstellt. Das Programmsignal ist über eine Einheit zum Wiederherstellen der Gleichstrom-Komponente an den ersten Eingang der Mischstufe angeschlossen. Der Ausgang des Symbolgenerators ist über eine Reihenschaltung aus einem Speicher, einer Formierungseinheit (Former) dipolarer Impulse und einem Tiefpaßfilter mit dem zweiten Eingang des Summierers verbunden. Der Ausgang des Symbolgenerators steht in Verbindung mit dem Steuereingang eines Formers dipolarer Impulse und ebenso mit dem Steuereingang eines Formers logischer Impulse, dessen Ausgang mit dem Informationseingang des Speichers verbunden ist. Sein Eingang ist über einen Trenner des Helligkeitssignals an den Ausgang der Einheit zum Wiederherstellen der Gleichstrom-Komponente angeschlossen, während sein zweiter Eingang mit dem Ausgang einer Einheit für eine wählbare Referenzspannung in Verbindung steht.

Eine weitere Variante der Vorrichtung zur Eingabe von Symbolen in ein Programm-Fernsehsignal enthält einen Summierer, dessen erster Eingang an den Ausgang einer Einheit zum Fixieren des Gleichstrompegels angeschlossen ist. Sein zweiter Eingang steht in Verbindung mit dem Ausgang einer Addiereinheit, deren erster Eingang über ein Tiefpaßfilter an den Ausgang der Einheit zum Fixieren des Gleichstrompegels angeschlossen ist. Ihr zweiter Eingang ist mit dem Ausgang des Symbolgenerators verbunden. Der Ausgang des Summierers ist ein Ausgang der Vorrichtung. Der Eingang der Einheit zum Wiederherstellen des Gleichstrompegels ist ein Eingang der Vorrichtung und wird mit dem Programm-Fernsehsignal gespeist. Der Ausgang des Symbolgenerators ist über eine Kalibriereinheit an den zweiten Eingang der Addiereinheit angeschlossen. Die Addiereinheit ist aus zwei Differenzverstärkern aufgebaut, deren verschiedennamige Eingänge miteinander verbunden sind. Sie bilden den ersten und zweiten Eingang der Addiereinheit. Ihre Ausgänge sind Ausgänge der Addiereinheit und über eine Reihenschaltung aus einem Impulsformer und einem zweiten Tiefpaßfilter an den zweiten Eingang des Summierers angeschlossen. Die Verbindung des Ausgangs der Einheit zum Fixieren des Gleichstrom-Pegels mit dem ersten Eingang des Summierers kann über eine Zeitausgleichseinheit verwirklicht werden. Das Verbinden der Ausgänge der Addiereinheit mit den Eingängen des Impulsformers kann über Begrenzer der positiven bzw. negativen Polarität verwirklicht werden.

Der Impulsformer der ersten Ausführung der Vorrichtung enthält einen Pegelkomparator, dessen beide Eingänge Eingänge des Impulsformers sind. Der Impulseingang des letzteren steht in Verbindung mit dem Ausgang des Symbolgenerators und sein Ausgang ist an den Steuereingang eines elektronischen Umschalters angeschlossen, dessen Ausgang ein Ausgang des Impulsformers ist. Die Signaleingänge des elektronischen Umschalters sind mit den Eingängen des Impulsformers verbunden.

Bei einer weiteren Ausführung der zweiten Variante, enthält der Impulsformer einen Komparator, dessen erster Eingang an eine Quelle der Referenzspannung angeschlossen ist. Sein zweiter Eingang steht in Verbindung mit dem Ausgang des ersten Tiefpaßfilters und ist der dritte Eingang des Impulsformers, dessen erster und zweiter Eingang mit den beiden Signaleingängen des elektronischen Umschalters verbunden sind, dessen Steuereingang an den Ausgang des Komparators angeschlossen ist.

Bei einer dritten Variante der Vorrichtung zur Eingabe von Symbolen in ein Programm-Fernsehsignal ist ein Summierer vorhanden, dessen erster Eingang über eine Reihenschaltung aus einer Einheit zum Fixieren des Gleichstrompegels und einer Zeitausgleicheinheit an eine Quelle des Programmsignals angeschlossen ist. Sein zweiter Eingang steht in Verbindung mit dem Ausgang eines elektronischen Umschalters, während sein Ausgang ein Ausgang der Vorrichtung ist. Der Steuereingang des elektronischen Umschalters ist an den Ausgang eines Pegelkomparators angeschlossen, dessen Eingang über ein Tiefpaßfilter mit dem Ausgang der Einheit zum Fixieren des Gleichstrompegels verbunden ist. Der weitere Eingang des Pegelkomparators steht in Verbindung mit einer Referenzspannungsquelle. Der Ausgang des Tiefpaßfilters ist über einen Translator des Gleichstrompegels an den Eingang des Komparators angeschlossen. Der Ausgang des Tiefpaßfilters ist über einen Inverter mit den Eingängen eines zweiten und eines dritten Translatoren des Gleichstrompegels verbunden. Die Ausgänge des zweiten und des dritten Translators des Gleichstrompegels stehen in Verbindung mit den beiden Eingängen des elektronischen Umschalters. Der Ausgang des letzteren ist an den einen Eingang eines zweiten elektronischen Umschalters angeschlossen, dessen anderer Eingang an Erde liegt. Sein Steuereingang ist mit dem Ausgang des Symbolgenerators verbunden, während sein Ausgang an den zweiten Eingang des Summierers angeschlossen ist.

Bei einer vierten Variante der Vorrichtung ist das Programmsignal über eine Einheit zum Fixieren des Gleichstrom pegels und in Reihe mit einer Zeitausgleichseinheit mit dem einen Eingang einer Additiv-Mischstufe verbunden, deren Ausgang ein Ausgang der Vorrichtung ist. Der Ausgang der Einheit zum Fixieren des Gleichstrompegels ist über eine Reihenschaltung aus einem Tiefpaßfilter, einem Inverter und einem Weißpegel-Translator an den einen Eingang eines elektronischen Umschalters angeschlossen. Der Ausgang des Inverters ist über einen Schwarzpegel-Translator mit dem zweiten Eingang des elektronischen Umschalters verbunden. Der Ausgang des letzteren steht in Verbindung mit dem einen Eingang eines zweiten elektronischen Umschalters, dessen anderer Signaleingang an den Potentialnullpunkt angeschlossen ist. Der Ausgang des zweiten elektronischen Umschalters ist über ein zusätzliches Tiefpaßfilter an den zweiten Eingang einer Additiv-Mischstufe angeschlossen. Der Steuereingang des ersten elektronischen Umschalters ist über einen Schlüsselsignal-Former graphischer Symbole mit dem Ausgang eines Zeichen-Generators verbunden. Der Steuereingang des zweiten elektronischen Umschalters ist an den Ausgang des Zeichen-Generators über einen Schlüsselsignal-Former eines phonisch neutralen Felds angeschlossen.

Der Schlüsselsignal-Former von graphischen Symbolen kann ein EXKLUSIVES ODER erhalten, dessen erster Eingang ein Eingang des Formers ist. Sein zweiter Eingang ist über eine Verzögerungsleitung an den Eingang des Formierers angeschlossen. Der Schlüsselsignal-Former für ein phonisch neutrales Feld ist als Verzögerungsleitung ausgeführt, mit einer Verzögerungszeit, die 1/2 der Verzögerungszeit der Verzögerungsleitung des Schlüsselsignal-Formers für graphische Symbole ist.

In einer weiteren Ausführung der vierten Variante enthält der Schlüsselsignal-Former für graphische Symbole zwischen seinem Eingang und Ausgang eine Reihenschaltung aus einer Verzögerungsleitung und einem Inverter. Der Schlüsselsignal-Former für ein phonisch neutrales Feld ist linear.

In einer dritten Ausführung der vierten Variante ist der Schlüsselsignal-Former für graphische Symbole ein Inverter, und der Schlüsselsignalformer für ein phonisch neutrales Feld ist eine Verzögerungsleitung.

Ein Vorteil des erfindungsgemäßen Verfahrens und der erfindungsgemäßen Vorrichtung zur Eingabe von Symbolen in ein Programm-Fernsehsignal ist die unveränderliche Qualität des Programmsignals nach Einführen der Symbole, weil das Programmsignal keiner Linearitätsfehler- oder Frequenz-Bearbeitung beim Einführen der Symbole unterzogen wird.

Ein weiterer Vorteil des erfindungsgemäßen Verfahrens und der erfindungsgemäßen Vorrichtung besteht in der Möglichkeit, sie bei allen Signalstandarten für die Farbigkeit, einschließlich bei Signalen nach SEKAM anzuwenden. Ein dritter Vorteil des erfindungsgemäßen Verfahrens und der erfindungsgemäßen Vorrichtung zur Eingabe von Symbolen in ein Programm-Fernsehsignal besteht darin, daß ein maximaler Kontrast der eingeführten Symbole bei einer unterschiedlichen Helligkeitscharakteristik des Programmsignals gesichert wird und zwar infolge der zur laufenden Helligkeit des Programmsignals adaptiven Bestimmung des Helligkeitspegels der im Bild eingeführten Symbole. Durch diese Adaptionsart ist es möglich, einen Durchsichtigkeitseffekt der Symbole für das Programmsignal zu erreichen.

Anhand der in der Zeichnung dargestellten Ausführungsbeispiele wird die Erfindung näher erläutert. Es zeigt:

Fig. 1 Zeitdiagramme der Signale zur Erläuterung des Verfahrens zur Eingabe von Symbolen in ein Programmsignal, bei dem der Helligkeitspegel des im Bild ausgesendeten Symbols konstant und gleich der maximalen Helligkeit ist,

Fig. 2 Zeitdiagramme der Signale zur Erläuterung des Verfahrens zur Eingabe von Symbolen in ein Programmsignal, bei dem der Helligkeitspegel des im Bild ausgesendeten Symbols in Abhängigkeit vom Momentan-Helligkeitspegel des Programmsignals variabel ist,

Fig. 3 ein Blockschaltbild einer Vorrichtung zur Eingabe von Symbolen in ein Programm-Fernsehsignal,

Fig. 4 Zeitdiagramme in unterschiedlichen Punkten der Vorrichtung der Fig. 3,

Fig. 5 ein Blockschaltbild einer zweiten Ausführungsform der Vorrichtung,

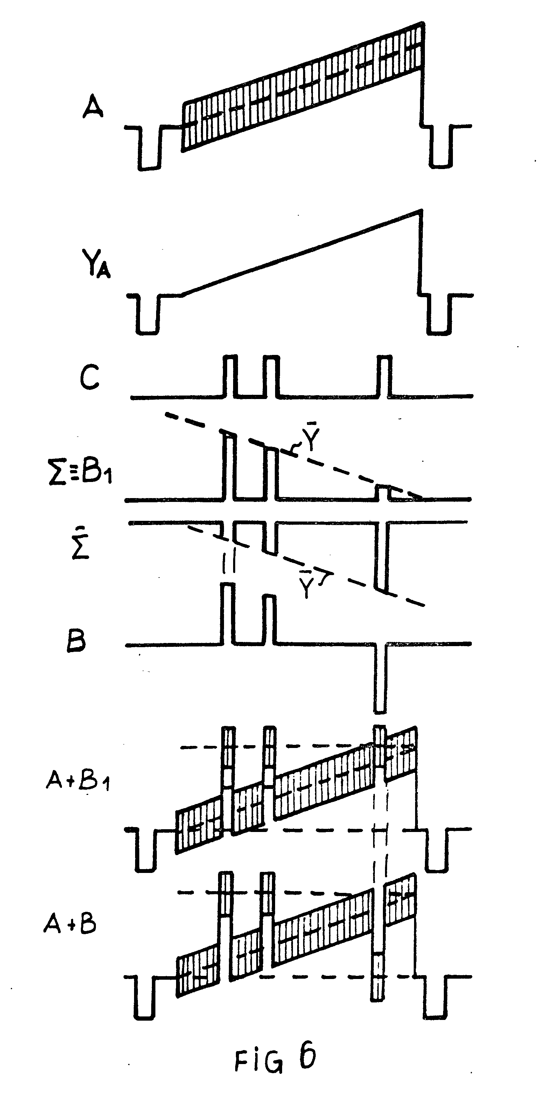

Fig. 6 ein Zeitdiagramm der Signale in unterschiedlichen Punkten der Schaltung der Fig. 5,

Fig. 7 ein Blockschaltbild einer Abwandlung der zweiten Ausführungsform der Vorrichtung,

Fig. 8 ein Blockschaltbild einer dritten Ausführungsform der Vorrichtung,

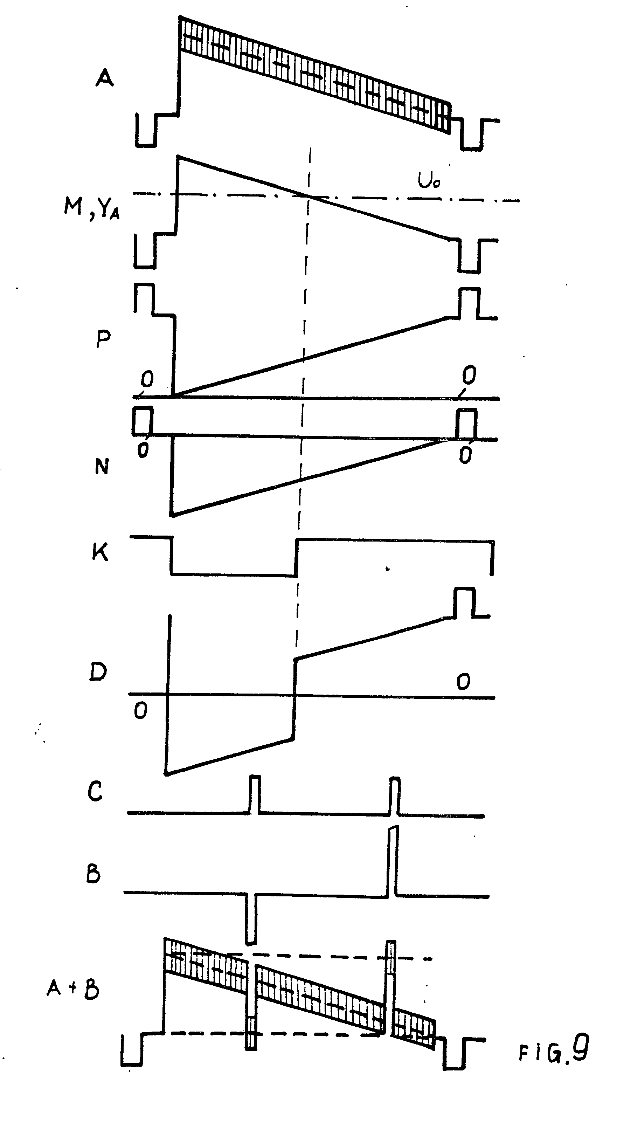

Fig. 9 ein Zeitdiagramm der Signale in unterschiedlichen Punkten der Blockschaltung von Fig. 8,

Fig. 10 ein Blockschaltbild eines Ausführungsbeispiels der Vorrichtung, die zum Subtitrieren bestimmt ist,

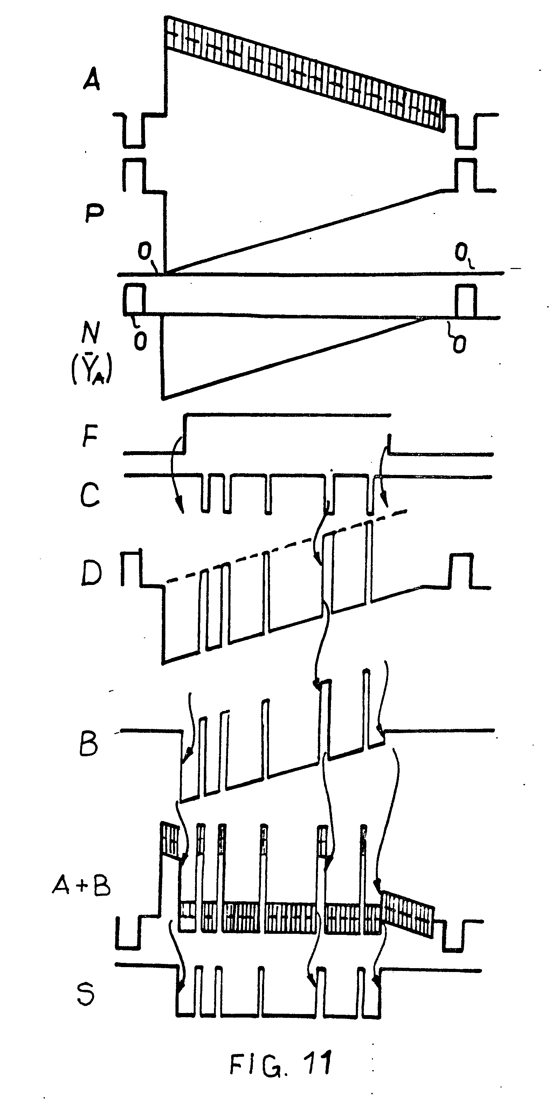

Fig. 11 Zeitdiagramme zur Veranschaulichung der Wirkungsweise der Vorrichtung, wobei die Bezeichnungen bezüglich der entsprechenden Signale identisch sind,

Fig. 12 eine Ausführungsvariante formierender Einheiten,

Fig. 13 ein Diagramm der Signale, welche die Funktionen der Einheiten von Fig. 12 veranschaulichen,

Fig. 14 eine zweite Variante der formierenden Einheiten,

Fig. 15 Diagramme bei der Ausführung der Einheiten gem. Fig. 14 und

Fig. 16 ein Diagramm der Signale, die die Wirkungsweise der Einheiten von Fig. 15 veranschaulichen.

Das Verfahren zur Eingabe von Symbolen in ein Programm-Fernsehsignal besteht im Summieren des Programm-Fernsehsignals und des Symbolsignals. Vor dem Summieren wird das Symbolsignal so formiert, daß sein Wert B stets kleiner oder gleich dem Unterschied des Helligkeitspegels E des im Bild übertragenen Symbols und des momentanen Helligkeitspegels VA des Programmsignals ist, gegeben mit dem Ausdruck

$$B \leqq E - VA \quad (1)$$

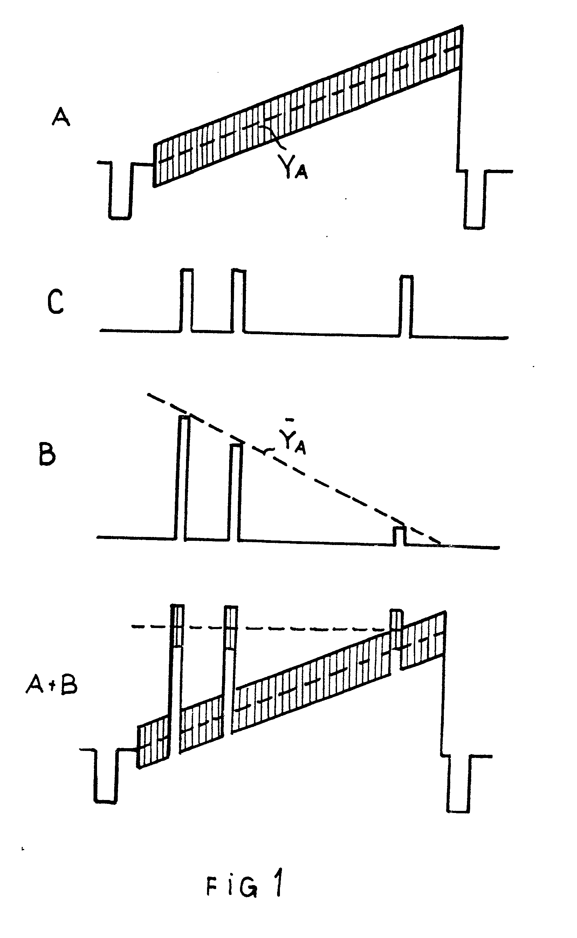

Bei der ersten Ausführungsvariante des Verfahrens zur Eingabe von Symbolen in ein Programm-Fernsehsignal (Fig. 1) ist der Helligkeitspegel des im Bild übertragenen Symbols E konstant und gleich dem VAmax.

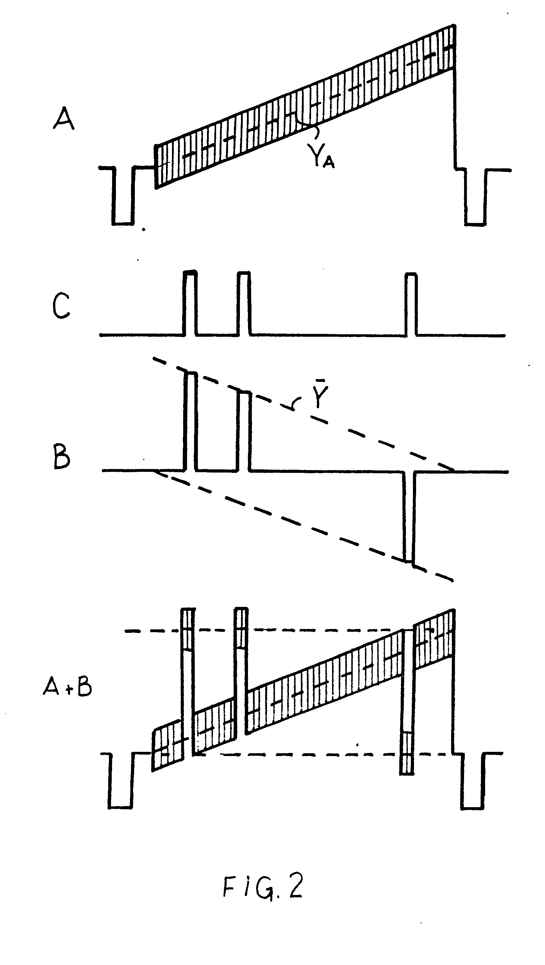

Bei einer zweiten Ausführungsvariante des Verfahrens zur Eingabe von Symbolen in ein Programm-Fernsehsignal (Fig. 2) wird der Helligkeitspegel E des im Bild ausgesendeten Symbols in Abhängigkeit von dem momentanen Helligkeits pegel des Programmsignals VA verändert. Der Helligkeitspegel der im Bild übertragenen Symbole weist zwei Werte E = VA max und E = 0 auf in Abhängigkeit vom Pegel des Helligkeitssignals gegenüber einem konstanten Pegel, der zwischen dem maximalen und minimalen Wert des Helligkeitssignals VA gewählt ist (in Fig. 2 nicht gezeigt). Demzufolge werden die Symbole in den hellen Teilen des Bildes mit einem niedrigen Helligkeitspegel und in den dunklen Teilen des Bildes mit einem hohen Helligkeitspegel übertragen.

Das Verfahren kann mit dem verallgemeinerten Ausdruck

$$V_o = V_a - V_c (k - V_a) \quad (2)$$

ausgedrückt werden, worin $V_o$ der Pegel des Helligkeitssignals nach dem Summieren, $V_a$ der Pegel des Helligkeitssignals vor dem Summieren, $V_c$ der Pegel des graphischen Signals und k ein Koeffizient ist, der den Helligkeitspegel des im Bild übertragenen Symbols bestimmt und Werte zwischen 0 und 1 (0 für einen Schwarzpegel - 0 % Helligkeit, 1 für einen Weißpegel - 100 % Helligkeit) annehmen kann.

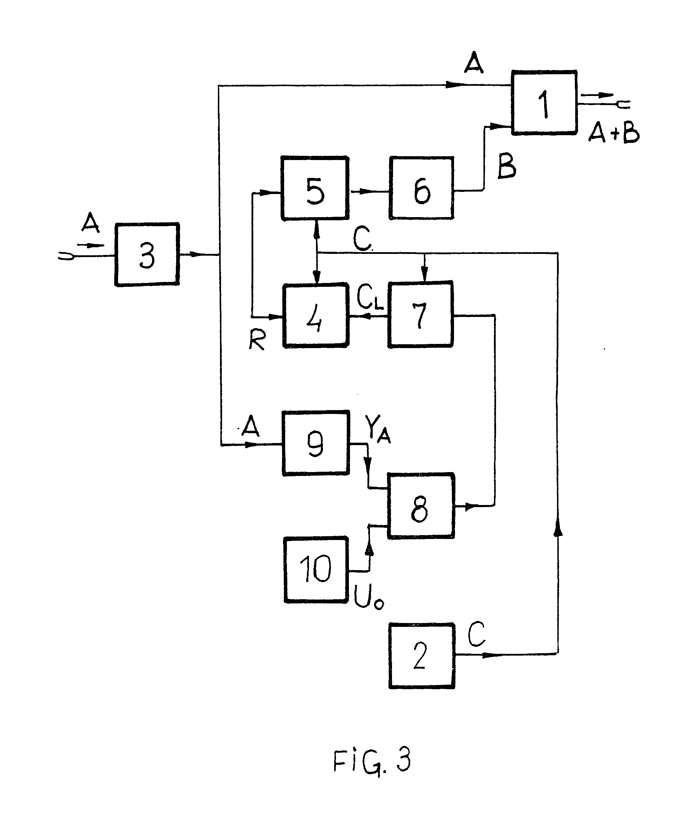

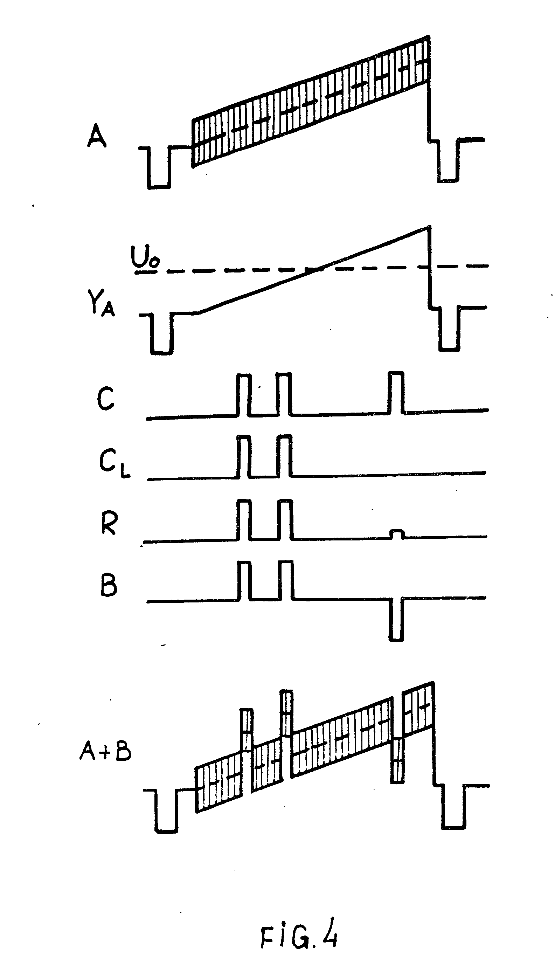

Die Vorrichtung zur Eingabe von Symbolen in ein Programm-Fernsehsignal (Fig. 3), die zur Durchführung des Verfahrens dient, enthält einen Summierer oder eine Mischstufe 1, an deren ersten Eingang die Quelle des Programm-Fernsehsignals A angeschlossen ist (Fig. 4). Ihr zweiter Eingang steht in Verbindung mit dem Ausgang des Symbolgenerators 2. Der Ausgang der Mischstufe 1 ist ein Ausgang der Vorrichtung. Das Programmsignal A ist über eine Einheit 3 zum Wiederherstellen der Gleichstromkomponente an den ersten Eingang der Mischstufe 1 angeschlossen. Der Symbolgenerator 2 ist mit dem zweiten Eingang der Mischstufe 1 über eine Reihenschaltung aus einem Speicher 4, einem Former 5 von dipolaren Impulsen und einem Tiefpaßfilter 6 verbunden. Der Ausgang des Symbolgenerators 2 steht in Verbindung mit dem Steuereingang des Formers 5 dipolarer Impulse und mit dem Steuereingang des Formers 7 logischer Signale, dessen Ausgang an den Informationseingang des Speichers 4 angeschlossen ist, während sein Eingang mit dem Ausgang eines Pegelkomparators 8 verbunden ist, dessen erster Eingang mit dem Ausgang der Einheit 3 zum Wiederherstellen der Gleichstromkomponente über einen Trenner 9 des Helligkeitssignals VA verbunden ist. Sein zweiter Eingang steht in Verbindung mit dem Ausgang 10 für eine wählbare Referenzspannung $V_o$.

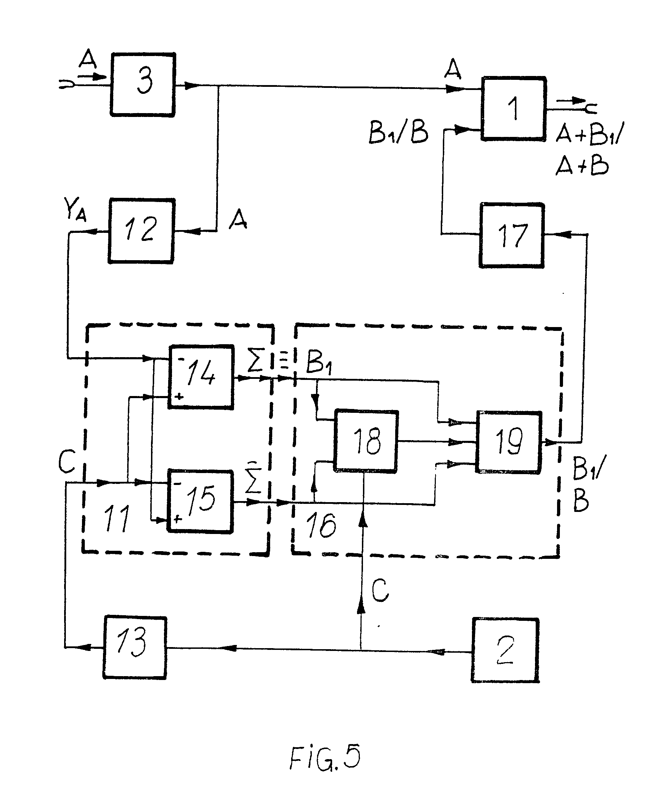

Die Vorrichtung zur Eingabe von Symbolen in ein Programm-Fernsehsignal von Fig. 5 enthält einen Summierer 1, dessen erster Eingang an den Ausgang der Einheit 3 zum Fixieren des Gleichstrompegels angeschlossen ist. Sein zweiter Eingang steht in Verbindung mit dem Ausgang einer Addiereinheit 11, deren erster Eingang über ein Tiefpaßfilter 12 an den Ausgang der Einheit 3 zum Fixieren des Gleichstrompegels angeschlossen ist, während ihr zweiter Eingang mit dem Ausgang des Symbolgenerators 2 verbunden ist. Der Ausgang des Summierers 1 ist ein Ausgang der Vorrichtung. Der Eingang der Einheit 3 zum Fixieren des Gleichstrompegels ist ein Eingang der Vorrichtung und wird mit dem Programm-Fernsehsignal A gespeist (Fig. 2) . Der Ausgang des Symbolgenerators 2 ist über eine Kalibriereinheit 13 an den zweiten Eingang der Addiereinheit 11 angeschlossen. Die Addiereinheit 11 ist aus zwei Differenzverstärkern 14, 15 aufgebaut, deren verschiednamige Eingänge miteinander verbunden sind und den ersten bzw. zweiten Eingang der Addier-Einheit 11 bilden. Die Ausgänge der Differenzverstärker 14, 15 sind Ausgänge der Addiereinheit 11 und über eine Reihenschaltung aus einem Impulsformer 16 und einem zweiten Tiefpaßfilter 17 an den zweiten Eingang des Summierers 1 angeschlossen. Der Impulsformer 16 enthält einen Pegelkomparator 18, dessen beide Eingänge Eingänge des Formers 16 sind. Sein Impulseingang steht in Verbindung mit dem Ausgang des Symbolgenerators 2, und sein Ausgang ist an den Steuereingang eines Umschalters 19 angeschlossen, dessen Ausgang ein Ausgang des Impulsformers 16 ist. Die Signaleingänge des Umschalters 19 stehen in Verbindung mit den Eingängen des Impulsformers 16.

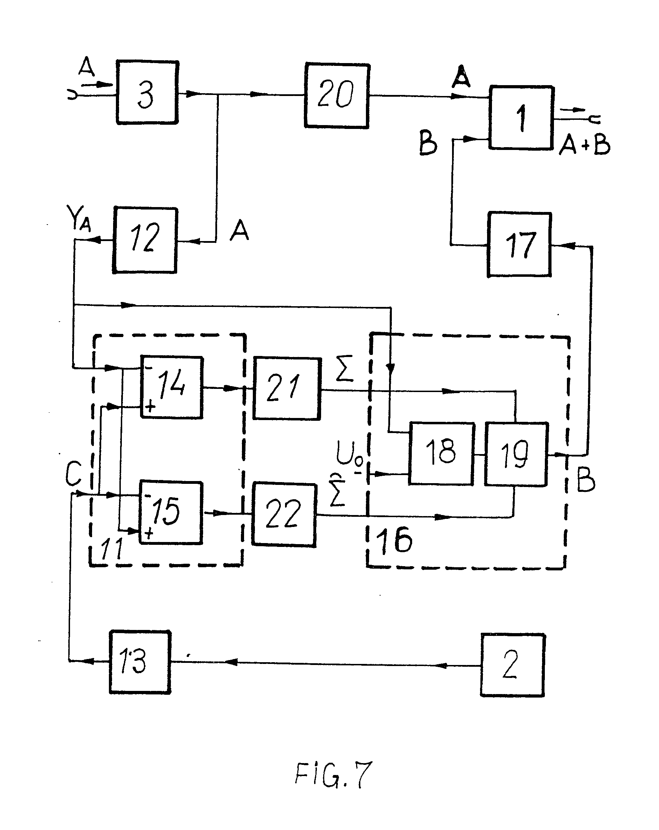

Bei der zweiten Ausführungsvariante der Vorrichtung zur Eingabe von Symbolen in ein Programmsignal (Fig. 7) ist der Ausgang der Einheit 3 zum Fixieren des Gleichstrompegels 3 über eine Zeitausgleich-Einheit an den ersten Eingang des Summierers 1 angeschlossen. Die Ausgänge der Addiereinheit 11 sind über Amplitudenbegrenzer 21 und 22 der negativen bzw. positiven Polarität mit den Eingängen des Impulsformers 16 verbunden. Der Impulsformer 16 enthält einen Komparator 18, dessen erster Eingang an die Quelle einer Referenzspannung $V_o$ angeschlossen ist. Sein zweiter Eingang steht in Verbindung mit dem Ausgang des ersten Tiefpaßfilters 12 und ist ein dritter Eingang des Impulsformers 16, dessen erster und zweiter Eingang an die Eingänge des Umschalters 19 angeschlossen sind, dessen Steuereingang mit dem Ausgang des Komparators 18 verbunden ist; sein Ausgang ist ein Ausgang des Impulsformers 16.

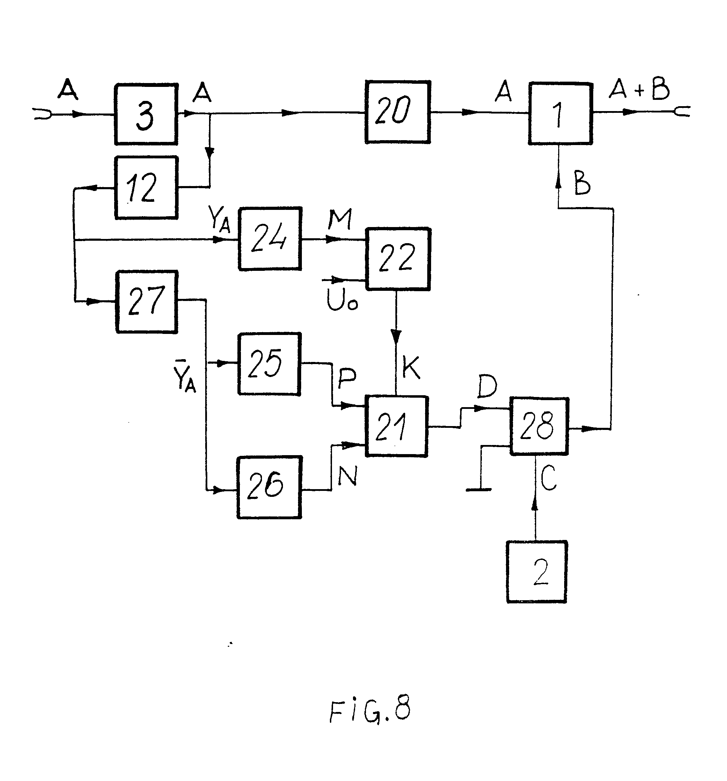

Bei einer dritten Variante der Vorrichtung zur Eingabe von Symbolen in ein Programm-Fernsehsignal (Fig. 8) enthält diese einen Summierer 1, dessen erster Eingang über eine Reihenschaltung aus der Einheit 3 zum Fixieren des Gleichstrompegels und einer Zeitausgleich-Einheit 20 an eine Quelle des Programm-Fernsehsignals A angeschlossen ist. Der zweite Eingang des Summierers 1 steht in Verbindung mit dem Ausgang eines elektronischen Umschalters 21, und sein Ausgang ist ein Ausgang der Vorrichtung. Der Steuereingang des elektronischen Umschalters 21 steht in Verbindung mit dem Ausgang eines Pegelkomparators 22, dessen Eingang über ein Tiefpaßfilter 12 an den Ausgang der Einheit 3 zum Fixieren des Gleichstrompegels angeschlossen ist. Der andere Eingang des Pegelkomparators 22 steht in Verbindung mit einer Referenzspannungs-Quelle $U_o$. Der Ausgang des Tiefpaßfilters 12 ist an den Signaleingang des Komparators 22 über einen Translator 24 der Gleichstromkomponente angeschlossen. Der zweite Ausgang des Tiefpaßfilters 12 steht über einen Inverter 27 in Verbindung mit den Eingängen eines zweiten Translators 25 und eines dritten Translators 26 des Gleichstrompegels. Die Ausgänge des zweiten und des dritten Translators 25 bzw. 26 des Gleichstrompegels sind an den beiden Eingängen des elektronischen Umschalters 21 angeschlossen, dessen Ausgang mit dem einen Eingang eines zweiten elektronischen Umschalters 28 in Verbindung steht, dessen anderer Eingang an Erde liegt. Sein Steuereingang ist an den Ausgang des Symbolgenerators 2 und sein Ausgang an den zweiten Eingang des Summierers 1 angeschlossen.

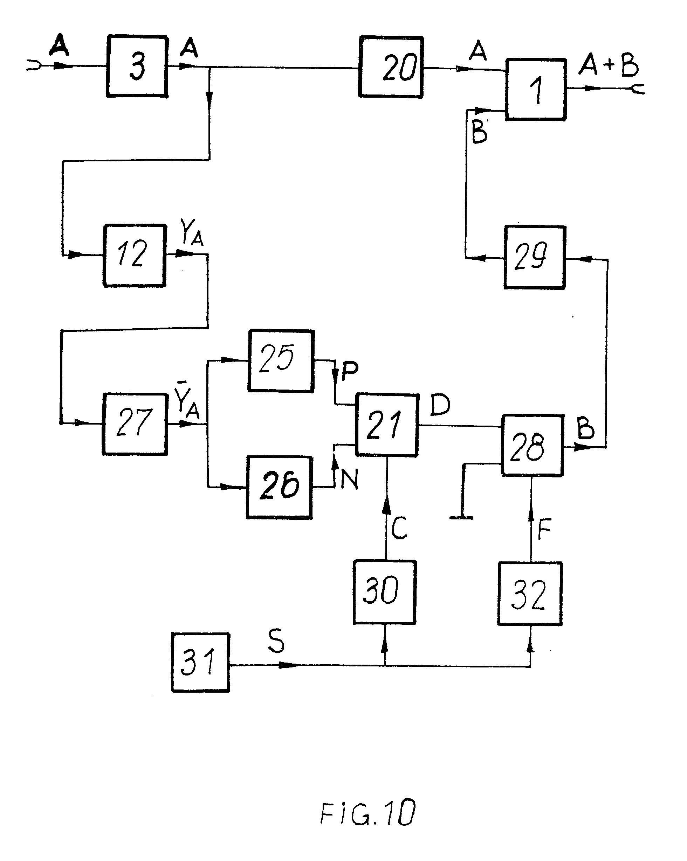

In der Variante zum Subtitrieren in Fig. 10 ist das Programmsignal A über eine Einheit 3 zum Fixieren des Gleich strompegels und eine hiermit in Reihe geschaltete Zeitausgleich-Einheit 20 an den einen Eingang einer Additiv-Mischstufe 1 angeschlossen, deren Ausgang ein Ausgang der Vorrichtung ist. Der Ausgang der Einheit 3 zum Fixieren ist gleichzeitig eine Reihenschaltung aus einem Tiefpaßfilter 12, einem Inverter 27 und Weißpegel-Translator 25 zu Nullpegel an den einen Eingang des elektronischen Kommutators 21 angeschlossen. Der Ausgang des Inverters 27 ist über einen Schwarzpegel-Translator 26 zu Null-Gleichstrompegel an den anderen Eingang des elektronischen Kommutators 21 angeschlossen, dessen Ausgang mit dem einen Signaleingang eines zweiten elektronischen Kommutators 28 in Verbindung steht, dessen anderer Signaleingang an den Potentialnullpunkt angeschlossen ist. Der Ausgang des zweiten elektronischen Kommutators 28 ist über ein zusätzliches Tiefpaßfilter 29 mit dem zweiten Eingang einer Additiv-Mischstufe 1 verbunden. Der Steuereingang des ersten elektronischen Kommutators 21 ist über einen Schlüsselsignalformer 30 für graphische Symbole an den Ausgang des Generators 31 für graphische Information angeschlossen. Der Steuereingang des zweiten elektronischen Kommutators 28 ist über einen Schlüsselsignalformer 32 eines phonisch neutralen Feldes, entsprechend für einen neutralen Kontrastsaum der Symbole, mit dem Ausgang des Generators 31 eines Komplexes graphischer Information verbunden.

Es sind mehrere Ausführungsvarianten der Former vorhanden.

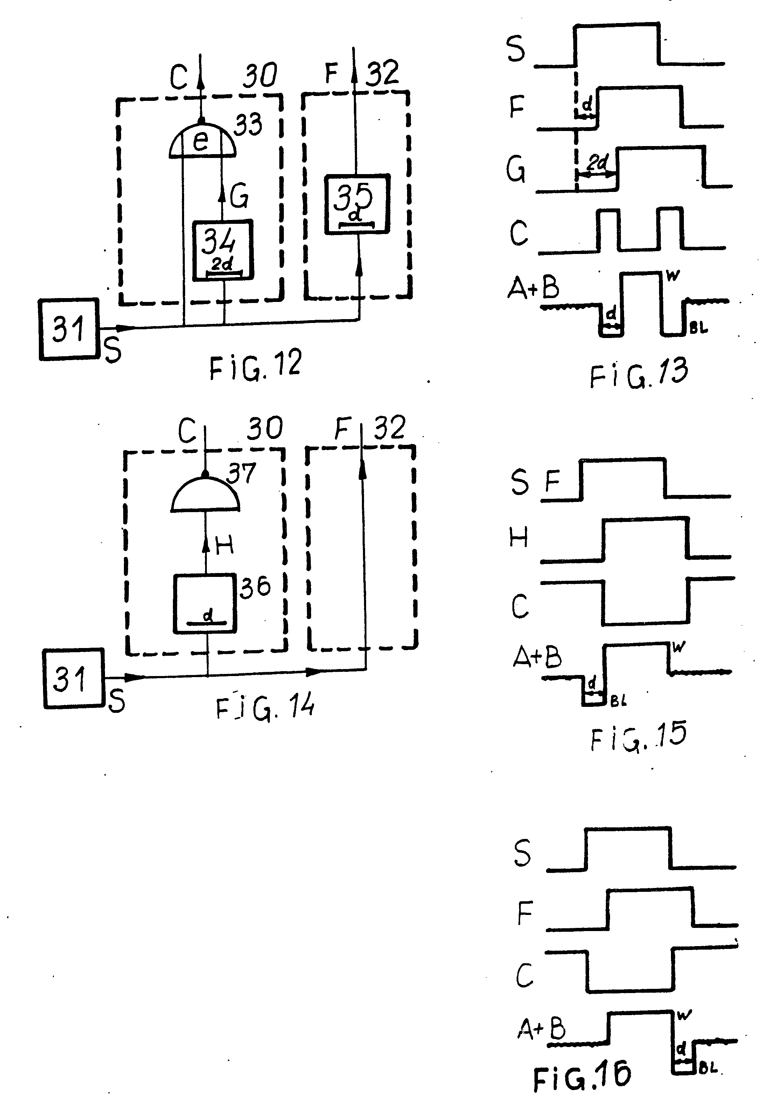

Bei der ersten Ausführungsvariante (Fig. 12) ist der Schlüsselsignalformer 30 für graphische Symbole aus einem EXKLUSIVEN ODER 33 aufgebaut, dessen erster Eingang di rekt verbunden ist, während sein zweiter Eingang über eine Verzögerungsleitung 34 an den Eingang des Formers 30 angeschlossen ist. Der Ausgang des EXKLUSIVEN ODERs 33 ist ein Ausgang des Formers 30. Der Schlüsselsignalformer 32 eines phonisch neutralen Felds ist als zweite Verzögerungsleitung 35 ausgeführt, deren Zeitverzögerung 1/2 der der ersten Verzögerungsleitung 34 ist.

Bei einer zweiten Ausführungsvariante der Former (Fig. 14) enthält der Schlüsselsignalformer 30 für graphische Symbole zwischen seinem Eingang und Ausgang eine Reihenschaltung aus einer Verzögerungsleitung 36 und einem Inverter 37. Der Schlüsselsignalformer 32 des phonisch neutralen Felds ist linear.

Bei einer dritten Ausführungsvariante der Former stellt der Schlüsselsignalformer 30 für graphische Symbole einen Inverter dar, während der Schlüsselsignalformer 32 eines phonisch neutralen Felds als Verzögerungsleitung ausgeführt ist.

Die Wirkungsweise der Vorrichtung von Fig. 3 ist folgende: Das nach dem Gleichstrompegel in der Einheit 3 zum Wiederherstellen der Gleichstrom-Komponente wiederhergestellte Programmsignal A wird von der Trägerfrequenz für Farbigkeit in der Abtrennstufe (Trenner) 9 des Helligkeitssignals VA filtriert. An den Ausgang des Pegelkomparators 8 gelangt dabei nur die Helligkeitskomponente VA des Programmsignals A und wird mit dem wählbaren Referenzpegel $U_o$ verglichen. Das am Ausgang des Komparators 8 erhaltene Signal wird im Former 7 logischer Signale mittels der Impulse des Signals C vom Ausgang des Symbolgenerators 2 in ein logisches Impulssignal $C_L$ umgewandelt. Für Helligkeitswerte VA, welche unter dem gewählten Pegel $U_o$ liegen, weist das logische Signal $C_L$ einen hohen Pegel auf und für Werte über dem gewählten Pegel $U_o$ einen niedrigen Pegel. Das so umgewandelte logische Signal $C_L$, das eine Information über den Pegel des Programmsignals A während der Impulse enthält, wird im Symbol mit dem Takt derselben Impulse C während der Halbraster im Speicher 4 aufgezeichnet. Die Anordnung des Speichers 4 erlaubt es, die im vorhergehenden Halbraster aufgezeichnete Information während der Aufzeichnung zu lesen. Am Ausgang des Speichers 4 wird die im vorhergehenden Halbraster aufgezeichnete, vom logischen Signal $C_L$ getragene Information aktualisiert. Die Vorausbestimmung des Speichers 4 ist als Puffer zum Stabilisieren des Ergebnisses des Vergleichs des Helligkeitssignals VA, während des Impulssignals C der Symbole. Das logische Signal vom Ausgang des Speichers 4 wird in ein bipolares Impulssignal mit konstanten Pegeln umgewandelt. Die positiven Impulse können den gleichen Pegel wie die negativen Impulse haben, unter der Bedingung, daß der Vergleichspegel $U_o$ 50 % dem Helligkeitspegel entspricht. Wenn ein anderer Vergleichspegel gewählt wird, müssen die Pegel am Ausgang des Formers 5 dipolarer Impulse mit der im Ausdruck (1) gegebenen Bedingung in Einklang sein. Möglich ist es, daß die positiven und negativen Werte der Impulse, sowie auch der Vergleichspegel des Helligkeitssignals $U_o$ mit der δ-Charakteristik der Sehkräfte in Erwägung gezogen werden, um einen maximalen Kontrasteffekt beim Einführen der Symbole im Bild zu erzielen.

Das nach Polarität und Amplitude formierte Signal am Ausgang des Formers 5 wird von seinen Komponenten im Bereich der Trägerfrequenz für Farbigkeit und über diese im Tiefpaßfilter 6 filtriert, wodurch Nebeneffekte von der Art Cross-Colour und ähnlichen verhindert werden. Das formierte und filtrierte Signal B wird mit dem Eingangs-Programmsignal im Summierer 1 additiv gemischt, an dessen Ausgang man das Resultat A + B erhält, welches das Ausgangssignal der Vorrichtung zur Eingabe von Symbolen in ein Programm-Fernsehsignal darstellt. Beim Einhalten der Bedingung (1) ist dieses Signal stets innerhalb der Modulations-Helligkeitsgröße, bei einem maximal optimierten Kontrast der eingeführten Symbole.

Die Wirkungsweise der Vorrichtung zur Eingabe von Symbolen in ein Programm-Fernsehsignal von Fig. 5 ist folgende: Das nach dem Gleichstrompegel in der Einheit 3 zum Fixieren wiederhergestellte Signal A der Trägerfrequenz für die Farbigkeit wird in dem Tiefpaßfilter 12 filtriert. Am Ausgang des letzteren wird die Helligkeitskomponente VA des Eingangssignals A erhalten. Das Signal C vom Ausgang des Symbolgenerators 2 wird in der Kalibriereinheit 13 dem Pegel nach kalibriert, an deren Ausgang das Signal die Form der Impulse der Symbole C aufweist, sein Pegel ist jedoch gleich der Größe des Helligkeitssignals $VA_{max}$. In der Addiereinheit 11 werden die kalibrierten Impulse des Signals der Symbole C mit einem positiven und einem negativen Vorzeichen mit dem der Zeit nach entsprechenden Helligkeitssignal VA mit einem negativen Vorzeichen bzw. mit positiven Vorzeichen mit Hilfe der Differenzverstärker 14, 15 summiert. An den Ausgängen der Addiereinheit 11 werden Signale Σ mit einer positiven Polarität mit einem Pegel der Impulse erhalten, welche den Pegel des Helligkeitssignals VA bis zum Weißpegel ($VA_{max}$) ergänzen
$$\Sigma = V_{Amax} - V_A$$
und Signale $\overline{\Sigma}$ mit negativer Polarität mit einem Pegel der Impulse gleich dem Pegel des Helligkeitssignals $V_A$ mit umgekehrter Polarität gleich
$$\overline{\Sigma} = -V_A.$$
Die Signale Σ und $\overline{\Sigma}$ am Ausgang der Addiereinheit 11 weisen Werte auf, die sich wegen des Betriebs der Differenzverstärker 7, 8 vom Nullpegel nur bei Vorhandensein von Signalen der Symbole C unterscheiden. Der Impulsformer 16 hat die Aufgabe, den einen der beiden Impulse an seinem Ausgang zu wählen und durchzulassen. Dies erfolgt durch den Vergleich der Pegel der Impulssignal Σ, $\overline{\Sigma}$ im Komparator 18, impulsartig durch das Signal der Symbole C gesteuert. Der Ausgangspegel des Komparators 18 steuert den Zustand des Umschalters 19 in der Zeit des Signals der Symbole C. Am Ausgang des Impulsformers 16 werden die Signale B2 von den Ausgangssignalen Σ oder $\overline{\Sigma}$ der Summiereinheit 11 erhalten, welche nach einem Pegel größer als 50 % $VA_{max}$ gewählt sind. Im zweiten Tiefpaßfilter 17 werden die Hochfrequenzkomponenten der Frequenzen filtriert, weche das Frequenzspektrum des Signals für die Farbigkeit begrenzen, um die Kreuzverzerrungen Helligkeit, Farbigkeit, genannt Cross-Colour, infolge des Einflusses der Fronten der Impulssignale B2, zu vermeiden. Am zweiten Eingang des Summierers 1 weist das Signal B2 einen Wert und ein Frequenzspektrum auf, welche mit dem Erfordernis für das Mischen mit dem Programmsignal für den Erhalt eines Endprodukts in den Grenzen der limitierten Größe und ohne Eindringen des eingeführten Signals des Symbols in das Spektrum des Signals für die Farbigkeit erwogen sind. Für die Signale der Symbole, eingeführt im Ausgangssignal, hängt der Pegel
$$A + B2 = VA_{max}, \text{ oder } A + B2 = 0$$
vom Momentanwert der Helligkeit ab.

Möglich ist es, daß nur ein Differenzverstärker benutzt wird, z.B. in der Addiereinheit 11. Sein Ausgangssignal $\Sigma \equiv B_1$ stellt ein einziges Signal für das additive Mischen im Summierer 1 dar. In diesem Fall werden die Symbole stets mit maximaler Helligkeit dargestellt. Möglich ist eine analoge Darstellung der Symbole mit einer minimalen Helligkeit mittels Benutzung des anderen Differenzverstärkers 15.

Die Wirkungsweise der Vorrichtung gemäß der Variante von Fig. 7 kennzeichnet sich durch einige Besonderheiten:

Erforderlich ist es, daß die Kalibriereinheit 13 des Signals der Symbole C die Größe des Helligkeitssignals $VA_{max}$ nach dem Modul mindestens um 43 % übersteigt, entsprechend den Synchronimpulsen im Helligkeitssignal und der Begrenzung der negativen Impulse $\overline{\Sigma}$ Bei einem zweckmäßigen Verschieben der Gleichstrompegel der Differenzverstärker 7, 15 in der Addiereinheit 11 (im negativen Bereich des ersten Differenzverstärkers 7 und im positiven Bereich des zweiten Differenzverstärkers 15) und einem dieser Verschiebung entsprechenden Pegel des kalibrierten Signals C werden am Ausgang des Begrenzers 21 der negativen Polarität positive Impulse mit einem Pegel von $VA_{max}$ bis 0 und am Ausgang des Begrenzers 22 der positiven Polarität mit einem Pegel von 0 bis $VA_{max}$ bei einer Veränderung des Helligkeitssignals vom Schwarzpegel bis Weißpegel erhalten.

Eine weitere Besonderheit ist die Steuerung des Komparators 18 durch den Pegel des Helligkeitssignals $V_A$, welcher ununterbrochen mit der Referenzspannung $U_o$ verglichen wird. Durch zweckmäßige Wahl der Referenzspannung $U_o$ kann der Helligkeitspegel verschoben werden, bei dem der Helligkeitswechsel - Schwarzpegel/Weißpegel für die Symbole im Bild erfolgt. Bei einer präzisen Ausführung der Vorrichtung für die Eingabe von Symbolen in ein Programm-Fernsehsignal A wird das letztere über eine Zeitausgleicheinheit 20 zum ersten Eingang des Summierers 1 übertragen. Die Vorausbestimmung der Zeitausgleicheinheit ist, das Programmsignal A mit einer Zeit zurückzuhalten, welche der summaren Gruppenzeit beider Tiefpaßfilter 12 und 17 gleich ist. Von der Genauigkeit dieses Zeitausgleiches hängt es ab, in was für einen Frequenzumfang die präzise Einführung der Symbole für den ganzen dynamischen Umfang des Helligkeitssignals verwirklicht wird. Für die europäischen Standards liegt dieser Frequenzumfang innerhalb des Rahmens von 0 bis 3,5 MHz, was die Präzision der Einführung von Symbolen für die reelle Statistik der Signale zufriedenstellt. Für diese Fälle ist die Zeit der Zeitausgleichseinheit 200 ns.

Die Wirkungsweise der Vorrichtung zur Eingabe von Symbolen in einem Programm-Fernsehsignal ist gemäß Fig. 8 die folgende: Das Eingangssignal A mit einem in der Einheit 3 zum Fixieren des Gleichstrompegels wiederhergestellten Gleichstrompegel wird vor den Hochfrequenzkomponenten filtriert, einschließlich das Signal für die Farbigkeit im Tiefpaßfilter 6, wodurch an ihrem Ausgang das Helligkeitssignal VA erhalten wird. Empfehlenswert ist es, daß das Tiefpaßfilter genügende Schnittsteilheit sichert, z.B. 15 = 17 dB/OCT und mehr bei einer Schnittfrequenz von ca. 3 MHz, um ein besseres Unterdrücken des sich dynamisch über das Frequenzband verändernden Signals für die Farbigkeit und der Hochfrequenz-Komponenten des Helligkeitssignals zu erreichen. Im ersten Translator 24 des Gleichstrompegels wird das Signal $V_A$, für einen Pegel mittlerer Helligkeit z.B. 50 % zu Null - M umgesetzt. Dasselbe umgesetzte Signal M wird nach dem Pegel mit der Referenzspannung $U_O$ im Komparator 8 verglichen, welcher über seinen Ausgangszustand K den Zustand des ersten elektronischen Umschalters 21 steuert. Das Helligkeitssignal $V_A$ wird gleichzeitig im Inverter 27 invertiert, wobei seine invertierten Werte $\overline{V_A}$ nach dem Gleichstrompegel in den Translatoren 25 und 26 umgesetzt werden. Dabei setzt der zweite Translator 25 des Gleichstrompegels das invertierte Helligkeitssignal $\overline{V_A}$ für einen Weißpegel (100 %) zu Null um, bei dem das umgesetzte Signal P an seinem Ausgang nur eine positive Polarität aufweist. Der dritte Translator 26 des Gleichstrompegels setzt das invertierte Signal $\overline{V_A}$ für einen Schwarzpegel (0 %) zu Null um, bei dem das umgesetzte Signal N an seinem Ausgang nur eine negative Polarität aufweist, mit Ausnahme des Bereiches der Synchronimpulse, was für die Funktion der Vorrichtung ohne Bedeutung ist. Beide zu Null für einen Weißpegel P und für einen Schwarzpegel N umgesetzten Signale werden von dem elektronischen Umschalter 21 zu seinem Ausgang in Abhängigkeit vom Pegel des Helligkeitssignals $V_A$ und der Referenzspannung $U_o$ des Komparators 22 umgeschaltet. Das Signal D am Ausgang des ersten elektronischen Umschalters 21, entsprechend an dem ersten Eingang des zweiten Elektronen-Umschalters 28 weist eine negative Polarität für die Helligkeitspegel über dem Ansprechpegel zum Komparator 22 und eine negative Polarität für Pegel unter dem Ansprechpegel auf. Dabei kann der Ansprechpegel wahlweise durch Veränderung der Referenzspannung $U_o$ geändert werden. Der zweite elektronische Umschalter 28 wird durch das Impulssignal der Symbole C umgeschaltet, bei dem der zweite Eingang des Summierers 1 vom Potentialnullpunkt der Masse gehoben wird und ihm gleichzeitig das Signal D vom Ausgang des ersten elektronischen Umschalters 21 zugeführt wird. Das Signal weist eine Polarität und einen Pegel auf, bei denen bei seinem additiven Mischen mit dem Programmsignal an dem Ausgang des Summierers 1 das Signal A und B2 für das Intervall des Impulses des Symbols C einen Weißpegel oder einen Schwarzpegel aufweist, in Abhängigkeit von dem Momentanwert der Helligkeit des Programmsignals beim Erhalten der Modulationsgröße der Helligkeit.

Durch operative Regelung der Referenzspannung $U_o$ in beiden Richtungen bezüglich Null ist die Änderung des Helligkeitspegels der Inversion der Helligkeit der eingeführten Symbole möglich, wodurch der Kontrast der Symbole im Bild, entsprechend der δ-Charakteristik des Sehvermögens optimiert werden kann.

Durch Verschieben der Pegel in den Translatoren 25, 26 des Gleichstrompegels für den zweiten Translator 25 zu einem negativen Wert für einen Weißpegel und für den dritten Translator 26 zu einem positiven Wert für einen Schwarzpegel, ist eine Veränderung der Helligkeit der eingeführten Symbole mit einem Kontrastminderungseffekt möglich.

Die Vorrichtung kann ebenso für eine wirkungsvolle Bearbeitung des Fernsehbildes angewandt werden, bei welchem anstatt eines Symbolgenerators ein Generator eines anderen Schlüsselsignals C benutzt wird, welcher eine Figur mit beliebiger Form im Intervall des aktiven (sichtbaren) Teils des Programm-Videosignals ist. Die Endwirkung einer solchen Bearbeitung stellt ein negatives, hochkontrastreiches Bild ohne Halbtöne dar.

Die Einengung des Frequenzbandes des Helligkeitssignals $V_A$ führt zu Unterschieden in der Gruppenzeit zwischen dem Programmsignal A und dem formierten Symbolsignal B für eine additive Mischung, was durch Einschalten des Programmsignals A der Zeitausgleicheinheit in den Kanal ausgeglichen wird. Der Zeitausgleich ist von großer Bedeutung bei der Eingabe von Symbolen in die feine Struktur des Programmsignals A und insbesondere bei einer vertikalen Orientierung. In diesem Fall weist das Signal dieselbe Frequenzstruktur auf und beim Summieren ist es erforderlich, dieses mit einer dem Programmsignal umgekehrten Phase einzufügen . Das genaue Einfügen dauert bis zu Frequenzen, die bestimmt sind vom Frequenzband des Tiefpaßfilters. Für höhere Frequenzen ist die Phasenverschiebung des Signals B gegenüber dem Programmsignal A unterschiedlich von 180°, wobei ein genaues Einfügen beider Signale A und B nicht zustande kommt. Da die spektrale Energie der reellen Videosignale entsprechend dem Helligkeitsspektralwert im Bereich bis 3 MHz liegt, hat dieser Vorgang keine praktische Bedeutung für die einwandfreie Funktion der Vorrichtung. Bei dem limitierten Frequenzband des Tiefpaßfilters 12 von ca. 3 MHz muß die Zeitaus gleicheinheit 3 eine Gruppenzeit von 200 ns aufweisen. Zwischen dem Ausgang des elektronischen Umschalters 28 und dem zweiten Eingang des Summierers 1 ist kein zweites Tiefpaßfilter angeschlossen. Das Anschließen eines solchen Filters zum Unterdrücken der Hochfrequenz-Komponenten, hervorgerufen von den Kommutationen der elektronischen Umschalter, ist in diesem Fall ebenso möglich, um die Kreuzverzerrungen Helligkeit/Farbigkeit, bekannt als Cross-Colour, abzuwenden. Empfehlenswert ist ebenso eine Begrenzung der Frontsteiligkeit der Signale C und K, welche die elektronischen Umschalter steuern, durch ihre zweckmäßige Formierung. Dies ist von besonderer Bedeutung für die Signale C, welche den zweiten elektronischen Umschalter 28 steuern, wodurch die Möglichkeit besteht, daß die Notwendigkeit der Benutzung eines zweiten Tiefpaßfilters wegfällt oder mindestens, daß ein solches Filter mit einer niedrigeren Stufe der Hochfrequenz-Unterdrückung benutzt wird. Dies ist günstig zur Verminderung der Gruppenzeit der Zeitausgleichseinrichtung und für das gute Einfügen der Signale A und B2 bei ihrer Mischung im Summierer 1.

Die Vorrichtung zur Eingabe von Symbolen in ein Fernseh-Programmsignal funktioniert gleichermaßen sowohl für ein Programmsignal bei den Quadratursystemen PAL und NTSC als auch bei SEKAM ohne die Notwendigkeit des Umschaltens in seine Struktur. Was das System SEKAM anbelangt, besitzt die Vorrichtung im Vergleich mit anderen den Vorteil, daß das Programmsignal keinem nichtlinearen Prozeß, wie Dekodierung/Kodierung und Frequenzfiltrierung, unterzogen wird.

Eine Besonderheit der Vorrichtung zur Eingabe von Symbolen in ein Programm-Fernsehsignal ist das Vorhandensein von laufender Farbigkeit des Programmsignals im Bild der eingeführten Symbole. Die Wirkung des Färbens der Symbole im wiedergegebenen Bild ist vermeidbar, weil die Symbole mit einer maximalen Helligkeit oder mit einer minimalen (statistisch seltener) übertragen werden, wobei das Zusetzen oder Abziehen von Helligkeit dem Vorrücken der lokalen Farbigkeit in dem wiedergegebenen Bild zum Zentrum zum Farblokus MKO - weiße Farbe oder zur Peripherie desselben - dunkler Ton entspricht. Dies weist einen Effekt bei der Wiedergabe auf, der im Entfärben der Symbole besteht.

Die Wirkungsweise der Variante der Vorrichtung für die Untertitel (Subtitles) ist die folgende.

Der Gleichstrompegel des Programmsignals A (Fig. 10) wird in der Fixiereinheit 3 fixiert und zum Mischen über die Zeitausgleicheinheit 20 dem ersten Eingang des Additivmischers 1 übermittelt. Im Tiefpaßfilter 12 wird die Trägerfrequenz für die Farbigkeit samt den Hochfrequenz-Komponenten des Helligkeitssignals beseitigt. Das erhaltene im Inverter 27 invertierte Helligkeitssignal $V_A$ wird im Translator 25 nach einem Weißpegel zu Nullpegel umgesetzt und so an die Null angeschlossen wird es dem einen Eingang des ersten elektronischen Kommutators 21 übermittelt. Dem zweiten Eingang des letzteren wird das an die Null bei einem Schwarzpegel angeschlossene und invertierte Helligkeitssignal N übertragen. Von dem komplexen Signal S für graphische Information, welches ein Signal für das Phonofeld und ein Signal der Symbole im Schlüsselsignal former 30 für graphische Symbole enthält, wird ein Schlüsselsignal C1 für den ersten elektronischen Kommutator 21 formiert, während im Schlüsselsignalformer eines Phonofelds 32 ein Schlüsselsignal F für den zweiten elektronischen Kommutator 28 formiert wird. Bei Fehlen eines Signals für die Einführung wiederholt das Signal D1 am Ausgang des ersten Kommutators das negative Signal N - Schwarzpegel zu Null, der zweite Kommutator aber ist durch seinen Ausgang an den Potentialnullpunkt angeschlossen, so daß am Ausgang des Additivmischers 1 das Programmsignal unverändert erhalten wird. Das Signal F für das Phonofeld öffnet den zweiten Kommutator 28 für das negative InverterHelligkeitssignal N - D1, B3, welches im Mischer 1 dem Programmsignal beigefügt am Ausgang einen Schwarzpegel gibt. Das Signal der graphischen Symbole C schaltet den ersten Kommutator zum invertierten Helligkeitssignal mit positiver Polarität P - Weißpegel auf Null um, so daß das Signal B3 für den zweiten Eingang des Mischers 1, dem Programmsignal A beigefügt am Ausgang einen Weißpegel gibt. Am Ausgang im Hintergrund mit einem Schwarzpegel dringen die Symbole mit einem Weißpegel ein.

Möglich ist es, dem Hintergrund einen weicheren Farbton in Grau zu verleihen, und zwar durch Verschieben des Pegels des Translators 26 entsprechend dem Signal N in positiver Richtung. Auf ähnliche Weise kann auch die Helligkeit der Symbole durch Verschieben des Signals P zu negativen Pegeln vermindert werden. Möglich ist ebenso eine Inversion der Helligkeit-Feld-Symbole durch Invertieren des Schlüsselsignals der Symbole C1 oder einen Austausch der Signalverbindungen P/N an den Eingängen des ersten Kommutators 21.

Bei Vorhandensein von getrennten Komponentensignalen für ein Phonofeld und für Symbole werden die Former 30, 32 wesentlich vereinfacht. Die Wirkungsweise der Variante mit unterschiedlicher Ausführung der Former 30, 32 (Fig. 12, 13, 14, 15) basiert auf der Formierung eines Kontrast-Hintergrunds für die Symbole - Phonosaum des Symbolsignals. Von dem Symbolsignal S werden Schlüsselsignale C1 für den ersten elektronischen Kommutator 21 formiert, entsprechend Signal F für den zweiten Kommutator 28. Wie von den Diagrammen der Signale in den Fig. 13, 15, 16 ersichtlich, wird beim Zusammenwirken der zweckmäßig gesteuerten elektronischen Kommutatoren 21 und 29 entsprechend der funktionalen Charakteristik der Struktur von Fig. 10 der Phono-Kontrastsaum mit drei unterschiedlichen Varianten verwirklicht: für die erste Variante - vor und nach der Linie des Symbols in horizontale Richtung; für die zweite Variante - vor der Linie des Symbols; und für die dritte Variante - nach der Linie des Symbols.

Auf analoge Weise und mit analogen Strukturen, aber unter Benutzung von Verzögerungsleitungen mit einer Zeitverzögerung von einer, entsprechend zwei Fernsehreihen wird ein Phonosaum der Symbole in vertikaler Richtung des Bildes erreicht. Ähnlich wird auch ein kombinierter Phonosaum nach der Waagerechten und Senkrechten erreicht.

Möglich sind auch weitere logische oder analoge Strukturen der Former 30 und 32 bei demselben Endeffekt.

**Patentansprüche**

1. Verfahren zur Eingabe von Symbolen in ein Programm-Fernsehsignal, bei dem das Programmsignal und das Symbolsignal summiert werden, dadurch **gekennzeichnet,** daß vor dem Summieren das Symbolsignal nach dem Pegel so formiert wird, daß sein Wert (B) stets kleiner oder gleich dem Unterschied zwischen dem Helligkeitspegel des im Bild übertragenen Symbols (E) und dem Momentan-Helligkeitspegel ($V_A$) des Programmsignals ist.

2. Verfahren nach Anspruch 1, dadurch **gekennzeichnet,** daß der Helligkeitspegel des im Bild übertragenen Symbols (E) konstant ist.

3. Verfahren nach Anspruch 1, dadurch **gekennzeichnet,** daß der Helligkeitspegel des im Bild übertragenen Symbols (E) sich in Abhängigkeit von dem Momentan-Helligkeitspegel des Programmsignals verändert.

4. Vorrichtung zur Eingabe von Symbolen in ein Programm-Fernsehsignal mit einer Mischstufe (1), an deren ersten Eingang die Quelle des komplexen Fernsehsignals angeschlossen ist, mit deren zweitem Eingang der Ausgang eines Symbolgenerators (2) in Verbindung steht und deren Ausgang ein Ausgang der Vorrichtung ist, dadurch **gekennzeichnet,** daß das Programmsignal (A) über eine Einheit (3) zum Wiederherstellen der Gleichstrom-Komponente an den ersten Eingang der Mischstufe (1) angeschlossen ist und daß der Symbolgenerator (2) mit dem zweiten Eingang der Misch stufe (1) über eine Reihenschaltung aus einem Speicher (4), einem Formierer (5) bipolarer Impulse und einem Tiefpaßfilter (6) verbunden ist, wobei der Symbolgenerator (2) mit dem Steuereingang des Formierers (5) bipolarer Impulse und mit dem Steuereingang eines Formierers (7) eines logischen Signals in Verbindung steht, dessen Ausgang an den Informationseingang des Speichers (4) angeschlossen ist, und sein Eingang in Verbindung mit dem Ausgang eines Pegelkomparators (3) steht, dessen erster Eingang mit dem Ausgang der Einheit (3) zum Wiederherstellen der Gleichstrom-Komponente über eine Trennstufe (9) des Helligkeitssignals verbunden ist, wobei sein zweiter Eingang an den Ausgang einer Einheit (10) für eine wählbare Referenzspannung angeschlossen ist (Fig. 3).

5. Vorrichtung zur Eingabe von Symbolen in ein Programm-Fernsehsignal mit einem Summierer (1), dessen erster Eingang mit dem Ausgang einer Einheit (3) zum Fixieren des Gleichstrompegels in Verbindung steht, und dessen zweiter Eingang mit dem Ausgang einer Addiereinheit (11) verbunden ist, deren erster Eingang über ein Tiefpaßfilter (12) an den Ausgang der Einheit (3) zum Fixieren des Gleichstrompegels angeschlossen ist, und deren zweiter Eingang in Verbindung mit dem Symbolgenerator steht, wobei der Ausgang des Summierers (1) ein Ausgang der Vorrichtung ist, dadurch **gekennzeichnet,** daß der Eingang der Einheit (3) zum Fixieren des Gleichstrompegels ein Eingang der Vorrichtung ist und mit dem Programm-Fernsehsignal (A) gespeist wird, wobei der Symbolgenerator (2) an den zweiten Eingang der Addiereinheit (11) über eine Kalibriereinheit (13) angeschlossen ist, wobei die Addiereinheit (11) aus zwei Differenzverstärkern (14, 15) aufgebaut ist, deren verschiedennamigen Eingänge miteinander verbunden sind und den ersten bzw. zweiten Ausgang der Addiereinheit (11) darstellen, und deren Ausgänge Ausgänge der Addiereinheit (11) sind, über eine Reihenschaltung aus einem Impulsformer (16) und einem zweiten Tiefpaßfilter (17) an den zweiten Eingang des Summierers (1) angeschlossen sind (Fig. 5).

6. Vorrichtung nach Anspruch 5, dadurch **gekennzeichnet,** daß der Ausgang der Einheit (3) zum Fixieren des Gleichstrompegels über eine Zeitausgleich-Einheit (20) an den ersten Eingang des Summierers angeschlossen ist (Fig. 7).

7. Vorrichtung nach Anspruch 5 oder 6, dadurch **gekennzeichnet,** daß die Ausgänge der Addiereinheit (11) über einen Begrenzer (21) der negativen Polarität und einen Begrenzer (22) der positiven Polarität an die Eingänge des Impulsformers (16) angeschlossen sind (Fig. 7).

8. Vorrichtung nach einem der Ansprüche 5 bis 7, dadurch **gekennzeichnet,** daß derImpulsformer (16) einen Pegelkomparator (18) enthält, dessen beide Eingänge Eingänge des Impulsformers (16) sind, daß sein Impulseingang in Verbindung mit dem Ausgang des Symbolgenerators (2) steht, und daß sein Ausgang an den Steuereingang eines elektronischen Umschalters (19) angeschlossen ist, dessen beide Signaleingänge an die Eingänge des Impulsformers (16) angeschlossen sind, während sein Ausgang ein Ausgang des Impulsformers (16) ist (Fig. 7).

9. Vorrichtung nach einem der Ansprüche 5 bis 7, dadurch **gekennzeichnet,** daß der Impulsformer (16) einen Komparator (18) enthält, dessen erster Eingang an eine Quelle für eine Referenzspannung ($U_o$) angeschlossen ist, dessen zweiter Eingang in Verbindung mit dem Ausgang des ersten Tiefpaßfilters (12) steht und ein dritter Eingang des Impulsformers (16) ist, dessen erster und zweiter Eingang mit den Signaleingängen des elektronischen Umschalters (19) verbunden sind und dessen Steuereingang an den Ausgang des Komparators (18) angeschlossen ist, wobei sein Ausgang ein Ausgang des Impulsformers (16) ist (Fig. 7).

10. Vorrichtung nach einem der Ansprüche 5 bis 7, dadurch **gekennzeichnet,** daß der Ausgang des Tiefpaßfilters (12) über einen Translator (24) des Gleichstrompegels an den Eingang des Komparators (22) angeschlossen ist, daß der Ausgang des Tiefpaßfilters (12) an die Eingänge eines zweiten und eines dritten Translators (25 bzw. 26) des Gleichstrompegels über einen Inverter (27) angeschlossen ist, und daß die Ausgänge des zweiten und des dritten Translators (25, 26) in Verbindung mit den beiden Eingängen des elektronischen Umschalters (21) stehen, dessen Ausgang mit dem einen Eingang eines zweiten elektronischen Umschalters (28) verbunden ist, dessen anderer geerdet ist, und dessen Steuereingang in Verbindung mit dem Ausgang des Symbolgenerators (2) steht, wobei sein Ausgang an den zweiten Eingang des Summierers (1) angeschlossen ist (Fig. 8).

11. Vorrichtung nach einem der Ansprüche 5 bis 10, dadurch **gekennzeichnet,** daß der Steuereingang des ersten elektronischen Kommutators (21) über einen Schlüsselsignalformierer (30) graphischer Symbole an den Ausgang eines Charakter-Generators (31) angeschlossen ist, und daß der Steuereingang des zweiten elektronischen Kommutators (28) mit dem Ausgang des Charakter-Generators (31) über einen Schlüsselsignalformierrer (32) für ein phonisch neutrales Feld (32) verbunden ist (Fig. 10).

12. Vorrichtung nach Anspruch 11, dadurch **gekennzeichnet,** daß der Schlüsselsignalformierer (30) graphischer Symbole aus einem EXKLUSIVEN ODER (33) besteht, dessen erster Eingang ein Eingang des Formierers (30) ist, dessen zweiter Eingang über eine Verzögerungsleitung (34) mit dem Eingang des Formierers (30) verbunden ist und dessen Ausgang ein Ausgang des Formierers (30) ist, wobei der Schlüsselsignalformierer (32) für ein phonisch neutrales Feld als Verzögerungsleitung (35) ausgeführt ist, deren Zeitverzögerung 1/2 der Zeitverzögerung der Verzögerungsleitung (34)des Schlüsselsignalformierers (30) graphischer Symbole ist (Fig. 12).

13. Vorrichtung nach Anspruch 11, **gekennzeichnet,** daß der Schlüsselsignalformierer (30) graphischer Symbole zwischen seinem Eingang und Ausgang eine Reihenschaltung aus einer Verzögerungs leitung (36) und einem Inverter (37) enthält, und daß der Schlüsselsignalformierer (32) für ein phonisch neutrales Feld (32) linear ist (Fig. 14).

14. Vorrichtung nach Anspruch 11, dadurch **gekennzeichnet,** daß der Schlüsselsignalformierer (30) graphischer Symbole ein Inverter ist, und daß der Schlüsselsignalformierer (32) für ein phonisch neutrales Feld eine Verzögerungsleitung darstellt (Fig. 14).

FIG 1

A

$Y_A$

C

B

$\bar{Y}$

A+B

FIG. 2

FiG. 3

FIG. 4

FiG.5

FIG 6

FIG. 7

FIG.8

FIG. 9

37306.8

FIG.10

FIG. 11

EP 0 323 851 A2

FIG.12

FIG.13

FIG.14

FIG.15

FIG.16